# FASCICULE DE BREVET EUROPEEN

(11) **EP 0 928 591 B1**
(45) Date de publication et mention de la délivrance du brevet: **11.12.2002**
(21) Numéro de dépôt: 99420003.8
(22) Date de dépôt: 11.01.1999
(51) Int. Cl.: A47J 31/40

(54) **Cafetière du type expresso comprenant un piston injecteur d'eau chaude et un porte-filtre**
Kaffeemaschine vom Expresso-Typ mit einem Kolben zum Einbringen von Heisswasser und einem Filterträger
Coffeemachine of the expresso type with a piston for injecting hot water and a filter support

(30) Priorité: 13.01.1998 FR 9800466
(43) Date de publication de la demande: 14.07.1999
(73) Titulaire: SEB S.A., 69130 Ecully (FR)
(72) Inventeur: Ligneau, Vincent, 69780 Mions (FR)

(56) Documents cités:
- EP-A- 0 564 399
- EP-A- 0 587 035
- DE-A- 3 233 085
- US-A- 5 406 882

## Description

La présente invention concerne une cafetière du type expresso.

Ce type de cafetière comprend un nez ou piston injecteur d'eau chaude et un porte-filtre destiné à recevoir la mouture de café.

Le porte-filtre est une sorte de cuve à paroi verticale cylindrique destinée à recevoir la mouture de café et comportant un fond muni d'une pluralité d'orifices formant filtre d'échappement de l'infusion. Une poignée est solidaire du fond du porte-filtre permettant de le manipuler, notamment de l'installer dans le nez de la cafetière.

Ce porte-filtre comprend une surface intérieure cylindrique. Le piston injecteur et la surface intérieure cylindrique sont montés coulissants l'un par rapport à l'autre.

Dans certaines réalisations, le piston est mobile et le porte-filtre est fixe. Dans d'autres réalisations, le porte-filtre est mobile et le piston est fixe.

Un bon café expresso requiert un tassage optimal de la mouture avant passage de l'eau chaude. Ce tassage optimal permet à la fois une meilleure extraction des arômes et une éjection du marc après confection du café plus aisée.

Ce tassage optimal de la mouture nécessite que le nez ou piston injecteur de la cafetière pénètre dans le porte-filtre jusqu'à venir comprimer ladite mouture. Cette compression doit être effectuée quel que soit le volume de mouture de café préalablement mise dans le porte-filtre. Ainsi, la pénétration du piston injecteur dans le porte-filtre est différente d'un café à l'autre.

La conséquence de ces contraintes et du passage d'eau chaude sous pression est que l'étanchéité entre le nez et le porte-filtre doit être assurée pour différentes positions relatives du nez par rapport au porte-filtre.

Le but de la présente invention est d'assurer cette fonction d'étanchéité entre le nez d'une cafetière expresso et son porte-filtre.

Les cafetières expresso qui garantissent l'étanchéité entre le nez et le porte-filtre, quel que soit le volume de mouture de café préalablement mise dans le porte-filtre, assurent la fonction d'étanchéité précitée avec un joint élastique à action radiale.

Ce type de joint doit supporter les contraintes de pression, de température, de contact avec le café boisson, avec la mouture de café et avec les agents détartrants.

De plus, ce joint doit permettre une manipulation aisée du porte-filtre par l'utilisateur lors du tassage de la mouture et lors du desserrage du porte-filtre après l'extraction du café. Cette manipulation aisée est caractérisée par le couple de frottement faible du porte-filtre sur le nez lors de son serrage et de son desserrage.

Le document EP 0 564 399 décrit (cf. le préambule de la revendication 1) une machine automatique à café comportant une chambre d'infusion délimitée par un organe de fermeture, un piston mobile actionné hydrauliquement pour comprimer la mouture, ledit piston comportant un joint annulaire d'étanchéité sur sa surface latérale, en contact avec la surface interne de la chambre d'infusion. Ce joint d'étanchéité présente comme inconvénient le fait que le couple de frottement entre le piston et la chambre d'infusion est élevé.

Un piston comportant un joint glissant recouvrant sa surface latérale externe et un joint annulaire à l'intérieur est décrit dans le document EP 0 587 035. Cependant, ce piston est prévu pour se déplacer à l'intérieur d'un cylindre de machine automatique de café afin d'injecter de l'air dans le mélange infusé, respectivement de forcer le passage de l'infusion vers la tasse. Un tel piston travaille donc dans des conditions de pression comparables à celles de la pression atmosphérique, donc loin de celles de l'invention.

Les solutions actuellement connues, ne satisfont pas à l'ensemble des contraintes ci-dessus ; soit l'étanchéité est respectée et le couple n'est pas acceptable, soit le couple est acceptable et l'étanchéité n'est pas respectée.

Le but de la présente invention est d'apporter une solution simple et efficace au problème ci-dessus.

L'invention vise ainsi une cafetière du type expresso comprenant un piston injecteur d'eau chaude et un porte-filtre destiné à recevoir la mouture de café et comportant une surface intérieure cylindrique, ledit piston injecteur et ladite surface intérieure cylindrique étant montés coulissants l'un par rapport à l'autre pour tasser la mouture avant le passage de l'eau chaude, la surface latérale du piston portant un joint pour réaliser l'étanchéité entre cette surface latérale et ladite surface intérieure cylindrique du porte-filtre lors de l'extraction du café quand le volume compris entre le porte-filtre, le piston injecteur et ledit joint est rempli par de l'eau à une pression égale à plusieurs fois la pression atmosphérique.

Suivant l'invention, cette cafetière est caractérisée en ce que ledit joint est constitué par deux éléments annulaires concentriques, l'élément intérieur étant en un matériau élastique et l'autre élément, en contact avec la surface intérieure cylindrique du porte-filtre, étant en un matériau à faible coefficient de frottement et en ce que les deux éléments annulaires sont logés dans une gorge réalisée dans la paroi latérale du piston, l'élément en matériau à faible coefficient de friction faisant légèrement saillie en dehors de ladite gorge.

L'élément en matériau à bas coefficient de frottement assure à la fois le faible couple de frottement et l'étanchéité entre le piston et le porte-filtre. Par contre, sa faible élasticité ne lui permet pas de résister longtemps aux contraintes de pression et son étanchéité serait rapidement altérée à cause de son fluage, sans la présence du deuxième élément en matériau à forte élasticité. En effet, ce deuxième élément par sa forte élasticité permet, en la renforçant, de pallier à la faiblesse du premier élément.

De préférence, l'élément intérieur est en élastomère.

De préférence également, l'autre élément en contact avec la surface intérieure du porte-filtre est en polymère fluoré tel que le polytétrafluoréthylène.

Selon une version préférentielle de l'invention, le piston injecteur d'eau chaude est agencé dans la partie supérieure du porte-filtre. Dans cet agencement, le joint définit, avec la partie inférieure du piston et avec la surface intérieure du porte-filtre, un volume dans lequel est tassée la mouture avant l'injection d'eau chaude sous pression.

Selon une variante de l'invention, l'élément intérieur élastique du joint est inséré dans une rainure ménagée en la face intérieure de l'élément extérieur en matériau à faible coefficient de frottement. Selon cette variante, l'ensemble étant logé dans une gorge réalisée dans la paroi latérale du piston, l'élément intérieur élastique présente une seule surface de contact avec ladite gorge. Ceci empêche le glissement relatif de l'élément intérieur par rapport à l'élément extérieur notamment pendant le montage de l'ensemble dans ladite gorge.

D'autres particularités et avantages de l'invention apparaîtront encore dans la description ci-après.

Aux dessins annexés donnés à titre d'exemples non limitatifs :
- la figure 1 est une vue en coupe axiale du piston injecteur et du porte-filtre d'une cafetière expresso conforme à l'invention,
- la figure 2 est une vue en coupe axiale du piston injecteur et du porte-filtre d'une cafetière expresso illustrant une variante de l'invention.

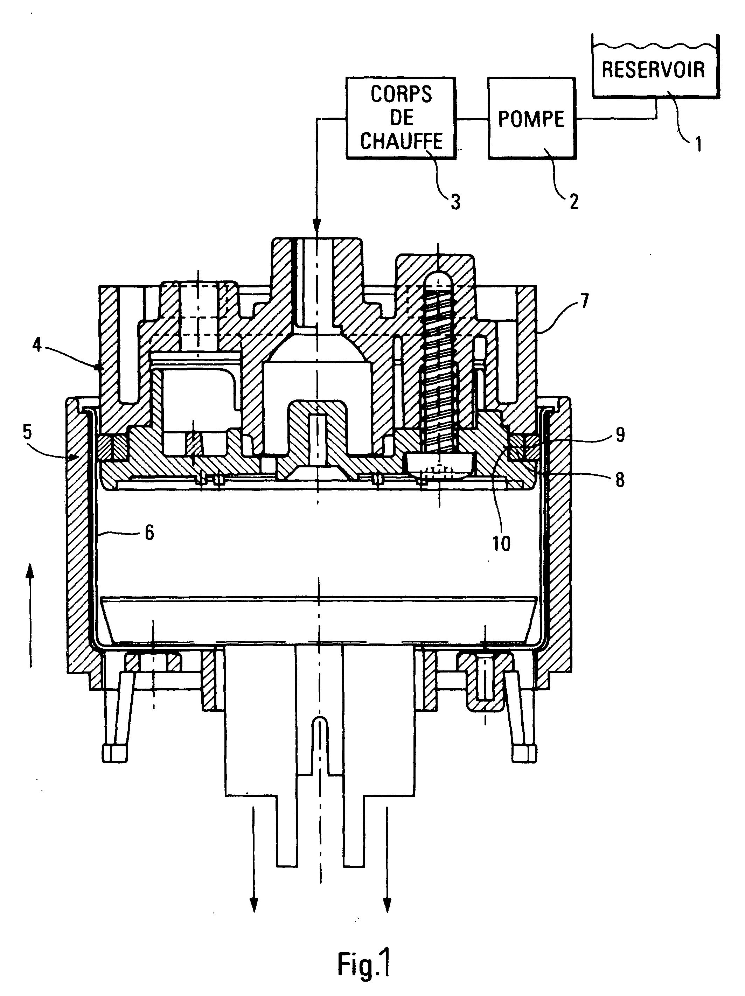

Comme montré par la figure 1, la cafetière du type expresso comprend un réservoir d'eau 1, une pompe 2, un corps de chauffe 3, et un piston 4 injecteur d'eau chaude situé dans la partie supérieure d'un porte-filtre 5 comportant une surface intérieure cylindrique 6. Le piston injecteur 4 et la surface intérieure cylindrique 6 du porte-filtre sont montés coulissant l'un par rapport à l'autre. Dans l'exemple représenté, le porte-filtre 5 est mobile selon un mouvement ascendant hélicoïdal.

Dans une variante de réalisation de l'invention, le mouvement du porte-filtre par rapport au nez est linéaire.

La surface latérale 7 du piston 4 porte un joint composite 8, 9 pour réaliser l'étanchéité entre la surface latérale 7 du piston et la surface intérieure cylindrique 6 du porte-filtre 5.

Conformément à l'invention, le joint composite est constitué par deux éléments annulaires concentriques 8, 9. L'élément intérieur 8 est en un matériau élastique et l'autre élément 9, en contact avec la surface intérieure cylindrique 6 du porte-filtre 5, est en un matériau à faible coefficient de frottement.

De préférence, l'élément intérieur 8 est en élastomère.

De préférence également, l'autre élément 9 en contact avec la surface 6 est en polymère fluoré, tel que le polytétrafluoréthylène.

Comme indiqué sur la figure 1, les deux éléments annulaires 8, 9 sont logés dans une gorge 10 réalisée dans la paroi latérale du piston 4. L'élément 9 en matériau à faible coefficient de friction fait légèrement saillie en dehors de la gorge 10.

Le dispositif que l'on vient de décrire fonctionne de la façon suivante :

Avant l'extraction du café, l'utilisateur met dans le porte-filtre 5 la quantité de café désirée. Puis il introduit ce porte-filtre autour du nez 4. Lors de cette introduction, la pièce 9 du joint composite à bas coefficient de frottement vient en contact avec la partie cylindrique 6 de l'intérieur du porte-filtre et du fait du matériau employé l'effort que doit accomplir l'utilisateur est faible.

Lors de l'extraction du café, le volume compris entre le porte-filtre 5, le nez 4 et le joint composite 8, 9, est rempli par de l'eau à une pression égale à plusieurs fois la pression atmosphérique.

La deuxième pièce 8 en matériau à forte élasticité permet, en la maintenant en place, à la première pièce 9 sensible au fluage sous contrainte, de supporter cette pression sans se déformer.

Après l'extraction de café, l'utilisateur enlève le porte-filtre 8 d'autour du nez 4.

Lors de cette opération, la pièce 9 du joint composite à bas coefficient de frottement, reste en contact avec la partie cylindrique 6 de l'intérieur du porte-filtre et du fait du matériau employé, l'effort que doit accomplir l'utilisateur est faible.

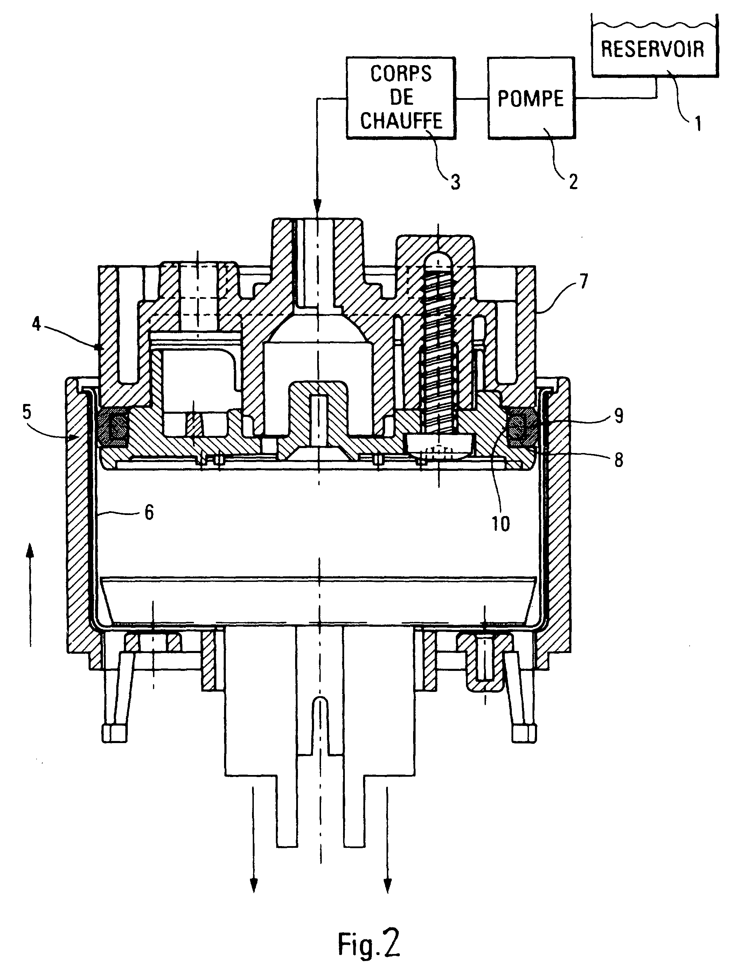

Dans la variante présentée à la figure 2, l'élément intérieur élastique 8, en forme de tore, est logé à l'intérieur de l'élément extérieur 9 en un matériau à faible coefficient de frottement qui présente une section en forme d'U horizontal, l'ensemble étant agencé dans une gorge 10 réalisée dans la paroi latérale du piston 4. L'élément 9 fait légèrement saillie en dehors de la gorge 10.

Un tel agencement présente une meilleure tenue mécanique de l'ensemble formant joint empêchant le déplacement relatif du joint extérieur par rapport au joint intérieur, par exemple pendant le montage de l'ensemble 8,9 dans la gorge 10 du piston.

Conformément à l'invention, la hauteur du joint 8 est comprise entre 0,5 et 1 fois la hauteur du joint 9.

Le rapport d'épaisseurs du joint intérieur 8 et du joint extérieur 9 se situe dans la plage de 1 à 1,5 :1.

Un joint composite 8,9 ainsi dimensionné présente de bonnes propriétés d'étanchéité pendant l'injection, dans l'espace défini par le joint, le porte-filtre et le piston situé en partie haute de ce dernier, d'eau chaude à une pression égale à plusieurs fois la pression atmosphérique. Ledit joint permet en même temps de tasser la mouture, avant le passage d'eau chaude, avec un couple de frottement réduit pendant le coulissement du porte-filtre par rapport au piston ou du piston par rapport au porte-filtre.

Bien entendu, l'invention n'est pas limitée à l'exemple de réalisation que l'on vient de décrire.

Ainsi, l'élément 8 du joint composite au lieu d'être en élastomère, pourrait être constitué par un élément en métal formant ressort déformable radialement, tel qu'un élément élastique en forme de segment ou tel qu'un ressort spiralé en forme de tore.

Ou, dans une variante de réalisation de l'invention, le mouvement du porte-filtre par rapport au nez pourrait être motorisé et automatique.

## Revendications

1. Cafetière du type expresso comprenant un piston (4) injecteur d'eau chaude et un porte-filtre (5) destiné à recevoir la mouture de café et comportant une surface intérieure cylindrique (6), ledit piston injecteur (4) et ladite surface intérieure cylindrique (6) étant montés coulissants l'un par rapport à l'autre pour tasser la mouture avant le passage de l'eau chaude, la surface latérale (7) du piston (4) portant un joint pour réaliser l'étanchéité entre cette surface latérale (7) et ladite surface intérieure cylindrique (6) du porte-filtre (5) lors de l'extraction du café quand le volume compris entre le porte-filtre (5), le piston injecteur (4) et ledit joint est rempli par de l'eau à une pression égale à plusieurs fois la pression atmosphérique, **caractérisée en ce que** ledit joint est constitué par deux éléments annulaires concentriques (8, 9), l'élément intérieur (8) étant en un matériau élastique et l'autre élément (9), en contact avec la surface intérieure cylindrique (6) du porte-filtre (5), étant en un matériau à faible coefficient de frottement et **en ce que** les deux éléments annulaires (8, 9) sont logés dans une gorge (10) réalisée dans la paroi latérale (7) du piston (4), l'élément (9) en matériau à faible coefficient de friction faisant légèrement saillie en dehors de ladite gorge (10).

2. Cafetière selon la revendication 1, **caractérisée en ce que** l'élément intérieur (8) est en élastomère.

3. Cafetière selon l'une des revendications 1 ou 2, **caractérisée en ce que** l'autre élément (9) est en polymère fluoré.

4. Cafetière selon la revendication 3, **caractérisée en ce que** l'autre élément (9) est en polytétrafluoréthylène.

5. Cafetière selon l'une des revendications précédentes, **caractérisée en ce que** l'élément intérieur (8) élastique du joint est inséré dans une rainure à l'intérieur de l'élément extérieur (9) en matériau à faible coefficient de frottement, l'ensemble formant joint étant logé dans ladite gorge (10) du piston (4).

## Patentansprüche

1. Kaffeemaschine vom Typ Espresso mit einem Kolben (1) zum Einspritzen von heißem Wasser und einem Filterträger (5) zur Aufnahme des Kaffeemahlguts, der eine zylindrische Innenfläche (6) aufweist, wobei der Einspritzkolben (4) und die zylindrische Innenfläche (6) zueinander gleitend angebracht sind, um das Mahlgut vor dem Durchlauf des heißen Wassers zu stampfen, wobei die Seitenfläche (7) des Kolbens (4) eine Dichtung trägt, um die Abdichtung zwischen dieser Seitenfläche (7) und der zylindrischen Innenfläche (6) des Filterträgers (5) beim Extrahieren des Kaffees herzustellen, wenn das sich zwischen dem Filterträger (5), dem Einspritzkolben (4) und der Dichtung befindliche Volumen mit Wasser unter einem Druck gefüllt ist, der dem gleich einem Vielfachen des Atmosphärendrucks ist, **dadurch gekennzeichnet, daß** die Dichtung aus zwei ringförmigen konzentrischen Elementen (8, 9) besteht, wobei das innenliegende Element (8) aus einem elastischen Material gebildet ist, und das andere Element (9), das sich in Berührung mit der zylindrischen Innenfläche (6) des Filterträgers (5) befindet, aus einem Material mit einem niedrigen Reibungskoeffizient besteht, und daß die beiden ringförmigen Elemente (8, 9) in eine Nut (19) eingelegt sind, die in der Seitenwand (7) des Kolbens (4) gebildet ist, wobei das Element (9) aus einem Material mit einem niedrigen Reibungskoeffizient geringfügig aus der Nut hervorsteht.

2. Kaffeemaschine nach Anspruch 1, **dadurch gekennzeichnet, daß** das innenliegende Element (8) aus Elastomer besteht.

3. Kaffeemaschine nach Anspruch 1 oder 2, **dadurch gekennzeichnet, daß** das andere Element (9) aus einem fluorierten Polymer besteht.

4. Kaffeemaschine nach Anspruch 3, **dadurch gekennzeichnet, daß** das andere Element (9) aus Polytetrafluorethylen bestent.

5. Kaffee nach einem der vorstehenden Ansprüche, **dadurch gekennzeichnet, daß** das elastische innenliegende Element (8) der Dichtung in eine Rille innerhalb des außenliegenden Elements (9) mit einem niedrigem Reibungskoeffizient eingesetzt ist, wobei die die Dichtung bildende Baugruppe in die Nut (10) des Kolbens (4) eingelegt ist.

## Claims

1. An expresso type coffee machine comprising a hot water injecting piston (4) and a filter carrier (5) for receiving ground coffee and having a cylindrical inside surface (6), said injector piston (4) and said cylindrical inside surface (6) being mounted to slide relative to each other in order to compact the ground coffee before the hot water is passed through, the side surface (7) of the piston (4) carrying a gasket to provide sealing between said side surface (7) and said cylindrical inside surface (6) of the filter carrier (5) while extracting coffee when the volume that exists between the filter carrier (5), the injector piston (4), and said gasket is filled with water at a pressure equal to several times atmospheric pressure, the machine being **characterized in that** said gasket is constituted by two concentric annular elements (8, 9), the inner element (8) being made of an elastic material and the other element (9) in contact with the cylindrical inside surface (6) of the filter carrier (5) being made of a material having a low coefficient of friction, and **in that** the two annular elements (8, 9) are housed in a groove (10) formed in the side wall (7) of the piston (4), the element (9) having a low coefficient of friction projecting slightly out from said groove (10).

2. A coffee machine according to claim 1, **characterized in that** the inner element (8) is made of elastomer.

3. A coffee machine according to claim 1 or claim 2, **characterized in that** the other element (9) is made of a fluorinated polymer.

4. A coffee machine according to claim 3, **characterized in that** the other element (9) is made of polytetrafluoroethylene.

5. A coffee machine according to any preceding claim, **characterized in that** the elastic inner element (8) of the gasket is inserted in a groove inside the outer element (9) of material having a low coefficient of friction, the gasket-forming assembly being received in said groove (10) of the piston (4).
